# FASCICULE DE BREVET EUROPEEN

(11) **EP 0 458 679 B1**
(45) Date de publication et mention de la délivrance du brevet: **12.10.1994**
(21) Numéro de dépôt: 91401260.4
(22) Date de dépôt: 15.05.1991
(51) Int. Cl.: F16F 13/00

(54) **Perfectionnements apportés aux dispositifs antivibratoires hydrauliques**
Verbesserungen hydraulischer Antischwingungsvorrichtungen
Improvements to hydraulic anti-vibration devices

(30) Priorité: 17.05.1990 FR 9006174
(43) Date de publication de la demande: 27.11.1991
(73) Titulaire: HUTCHINSON, F-75384 Paris Cédex 08 (FR)
(72) Inventeur: Bouhours, Jean-Paul, F-28290 Arrou (FR)
(74) Mandataire: Behaghel, Pierre

(56) Documents cités:
- EP-A- 0 285 696
- EP-A- 0 297 974
- GB-A- 2 191 561
- US-A- 4 796 874

## Description

L'invention est relative aux dispositifs antivibratoires hydrauliques destinés à être interposés aux fins d'amortissement et de liaison, voire de support, entre deux éléments rigides tels qu'un châssis de véhicule et qu'un train de suspension ou que le moteur de ce véhicule.

Elle concerne plus particulièrement, parmi ces dispositifs, ceux qui comportent :
- deux armatures rigides solidarisables respectivement avec les deux éléments rigides à réunir,
- un corps en élastomère travaillant selon une direction X, corps reliant entre elles les deux armatures et formant au moins en partie avec celles-ci deux chambres étanches alignées selon la direction X,
- un passage étranglé faisant communiquer les deux chambres entre elles,
- et une masse de liquide remplissant les deux chambres et le passage étranglé.

Comme on le sait, avec un tel dispositif, l'application sur l'une des armatures, selon la direction X, d'oscillations de relativement grande amplitude (généralement supérieure à 0,5 mm) et de relativement basse fréquence (généralement de l'ordre de 5 à 15 Hz) telles que celles provoquées par des mises en résonance d'éléments suspendus, a pour effet de refouler le liquide de l'une des deux chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées.

L'invention concerne plus particulièrement encore, parmi les dispositifs antivibratoires du genre décrit ci-dessus, ceux pour lesquels le passage étranglé est décomposé en au moins trois tronçons montés en parallèle entre les deux chambres, la section d'ouverture de l'un de ces tronçons dit premier tronçon étant invariable et celles des deux autres tronçons, dits respectivement second tronçon et troisième tronçon, étant au contraire réglables et asservies aux fréquences des oscillations à amortir, les dimensions des trois tronçons étant déterminées de façon telle que le dispositif assure un amortissement optimum sur une relativement haute fréquence F₂ pour les ouvertures maximum des second et troisième tronçons.

Un tel dispositif est divulgué dans le document GB-A-2 191 561.

Toutefois, le dispositif divulgué dans le document GB-A-2 191 561 présente l'inconvénient de comporter deux mécanismes de commande distincts pour régler respectivement les sections des second et troisième tronçons du passage étranglé. Ce dispositif est donc à la fois lourd et complexe.

L'invention a pour but, surtout, de remédier à cet inconvénient.

A cet effet, les dispositifs antivibratoires du genre en question selon l'invention sont essentiellement caractérisés en ce que les dimensions des trois tronçons sont choisies de façon telle que le dispositif assure un amortissement optimum sur une relativement basse fréquence F₁ pour les fermetures maximum des second et troisième tronçons, et sur une fréquence F₃ située dans l'intervalle séparant les fréquences F₁ et F₂ pour l'ouverture maximum du troisième tronçon et la fermeture maximum du second tronçon, en ce que les réglages des sections d'ouverture des second et troisième tronçons sont assurés à l'aide de cames rotatives solidaires d'un même arbre, en ce que les positions angulaires de cet arbre sont asservies aux fréquences des oscillations à amortir, et en ce que ledit arbre peut être disposé sélectivement dans une première position angulaire où les cames obturent totalement les second et troisième tronçons, dans une deuxième position angulaire où les cames obturent totalement le second tronçon et dégagent totalement le troisième tronçon; et dans une troisième position angulaire où les cames dégagent totalement les second et troisième tronçons.

Dans des modes de réalisation préférés, on a recours en outre à l'une et/ou à l'autre des dispositions suivantes :
- les profils des cames sont dessinés de façon telle que, à partir d'une position angulaire pour laquelle elles obturent totalement les second et troisième tronçons, la rotation de l'arbre dont elles sont solidaires ait pour effet, successivement, de dégager progressivement le troisième tronçon jusqu'à son ouverture maximum, puis le second tronçon jusqu'à son ouverture maximum,
- deux au moins des trois tronçons ont une portion en commun débouchant dans l'une des chambres par un même orifice.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

Les figures 1 et 2, de ce dessin, montrent respectivement en coupe axiale selon I-I figure 2 et en coupe transversale selon II-II figure 1, un dispositif antivibratoire hydraulique établi selon l'invention.

La figure 3 est un schéma faisant apparaître les circuits hydrauliques de ce dispositif ainsi que leur mode de réglage.

La figure 4 est un graphique explicatif.

Le dispositif antivibratoire plus particulièrement illustré est ici un manchon de support du type à débattements diamétraux.

Ce manchon comporte :
- une armature métallique interne tubulaire 1,
- une armature métallique externe tubulaire de révolution 2 entourant l'armature 1,
- et un corps en élastomère 3 reliant l'une à l'autre les deux armatures 1 et 2 en ménageant entre celles-ci deux poches étanches A et B diamétralement opposées selon une direction X.

L'armature interne 1 est destinée à être solidarisée avec une broche (non représentée) qui la traverse jointivement alors que l'armature externe 2 est destinée à être solidarisée avec un palier (non représenté), cette broche et ce palier étant solidaires respectivement de deux éléments rigides entre lesquels on désire monter le support antivibratoire, éléments que l'on supposera dans la suite être un châssis de véhicule et le moteur à combustion interne de ce véhicule.

Les deux poches A et B communiquent entre elles par des canaux étroits sur lesquels on reviendra ci-après et l'ensemble formé par ces deux poches et par ces canaux étroits est rempli d'un liquide.

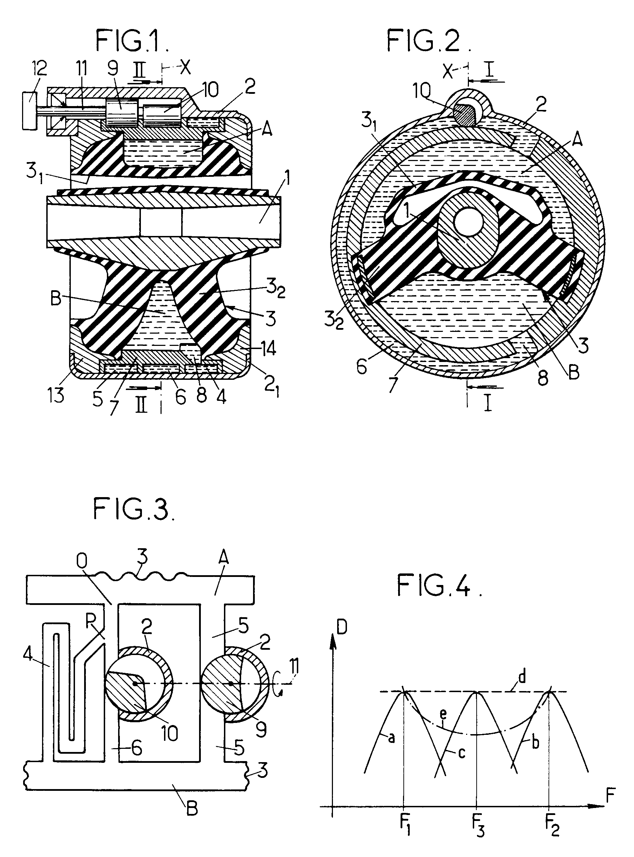

Les canaux étroits en question sont ici au nombre de trois, désignés respectivement par les références 4, 5 et 6 sur les figures 1, 2 et 3.

Ils sont tous les trois délimités extérieurement par la face intérieure de l'armature tubulaire externe 2 et intérieurement par des gorges évidées dans un fourreau cylindrique 7 lui-même introduit jointivement dans ladite armature 2, la communication entre chaque canal et les poches A et B étant effectuée à travers des lumières ou orifices 8 évidés dans le fourreau 7.

Le premier canal 4 est ouvert en permanence et sa section demeure invariable.

Les sections d'ouverture du second canal 5 et du troisième canal 6 sont au contraire réglables à l'aide de cames rotatives 9 et 10 toutes les deux solidaires d'un mème arbre 11 monté sur l'armature 2 et d'axe parallèle à celui de cette armature.

Chacune des cames 9 et 10 est montée de façon à pouvoir, selon sa position angulaire, obturer totalement, dégager partiellement ou totalement le canal 5 ou 6 auquel elle est associée.

Les dessins et positions angulaires respectives de ces cames 9 et 10 sont choisis de façon telle qu'elles obturent totalement et en même temps les deux canaux 5 et 6 pour une position angulaire donnée de l'arbre 11 et que, en faisant tourner cet arbre à partir de cette position, on observe successivement le dégagement partiel, puis total du canal 6, puis le dégagement partiel, puis total du canal 5.

Les déplacements angulaires de l'arbre 11 sont commandés par un ensemble 12 qui est piloté par la fréquence des oscillations à amortir.

Cet ensemble est agencé de façon à détecter à chaque instant ladite fréquence et à corriger la position angulaire de l'arbre 11 de façon telle que les degrés d'ouverture des deux canaux 5 et 6 audit instant soient précisément ceux correspondant à un amortissement optimum des oscillations se produisant à la fréquence détectée.

L'ensemble en question comprend par exemple un tachymètre propre à détecter la vitesse de rotation de l'arbre moteur du véhicule si les oscillations que l'on désire amortir sont celles engendrées par le fonctionnement de ce moteur.

Le dispositif à trois canaux qui vient d'être décrit peut être utilisé avec avantage pour l'amortissement d'oscillations appliquées dans la direction X entre les deux armatures 1 et 2 et dont les fréquences sont comprises entre une valeur minimum F₁ de l'ordre de 5 Hz et une valeur maximum F₂ de l'ordre de 30 ou 40 Hz.

A cet effet, on dimensionne le premier canal 4 de façon telle que, lorsqu'il est seul à relier entre elles les deux poches A et B, les deux autres canaux étant obturés par leurs cames respectives, les oscillations amorties de façon optimum aient une fréquence égale à F₁.

Les dimensions du troisième canal 6 sont choisies de façon telle que, lorsque ce troisième canal est totalement ouvert et que le second canal 5 demeure fermé, les oscillations amorties de façon optimum soient celles correspondant à une fréquence F₃ comprise entre les deux fréquences F₁ et F₂, par exemple de l'ordre de 15 Hz pour l'exemple numérique ci-dessus retenu.

Enfin, les dimensions du second canal 5 sont choisies de façon telle que, lorsque les trois canaux 4, 5 et 6 sont totalement dégagés, les oscillations amorties de façon optimum soient celles correspondant à la fréquence maximum F₂.

Avec un tel dispositif, on parvient à amortir d'une façon excellente les différentes oscillations correspondant aux fréquences F₁, F₂ et F₃ et il en est de même pratiquement pour toutes les fréquences comprises entre ces trois valeurs.

Ce résultat est schématisé sur la figure 4 où lon voit un graphique faisant apparaître, en fonction de la fréquence F portée en abscisses, le degré d'amortissement D porté en ordonnées.

Les trois courbes a, b et c correspondent respectivement aux comportements du dispositif vis-à-vis des différentes fréquences, pour :
a/ l'ouverture totale du seul canal 4 avec fermeture totale des canaux 5 et 6,
b/ l'ouverture totale des trois canaux 4, 5 et 6,
c/ l'ouverture totale des canaux 4 et 6 avec fermeture totale du canal 5.

On voit que ces trois courbes correspondant respectivement à trois positions angulaires distinctes de l'arbre 11, présentent respectivement des sommets pour les trois fréquences F₁, F₂ et F₃ et que, pour les valeurs de fréquence autres que celles-là, l'amortissement du dispositif est limité.

La courbe présentée en d correspond au fonctionnement du dispositif ci-dessus automatiquement asservi aux fréquences des oscillations à amortir de la manière décrite ci-dessus : on voit que cette courbe est assimilable en première approximation à une droite horizontale, ce qui montre l'excellence de l'amortissement obtenu pour l'ensemble des fréquences comprises entre F₁ et F₂.

Par comparaison, on voit en e la courbe représentant le comportement du même dispositif en l'absence du troisième canal qui constitue la principale caractéristique de la présente invention : cette courbe e rejoint bien entendu la courbe d pour les fréquences F₁ et F₂, mais fait apparaître une chute notable de l'amortissement pour les fréquences intermédiaires.

Comme dit plus haut, les dimensions des différents canaux 4, 5 et 6 sont déterminées en fonction de valeurs prédéterminées de fréquences.

Leurs sections droites et/ou étendues angulaires respectives sont généralement distinctes.

En particulier l'un au moins de ces canaux, et en général le premier canal 4, peut s'étendre le long de plusieurs circonférences du fourreau 7, étant formé par exemple de plusieurs spires hélicoidales successives ou de plusieurs tronçons circulaires raccordés bout à bout par des tronçons obliques.

Dans des modes de réalisation avantageux, les profondeurs des gorges creusées dans le fourreau 7 pour constituer les canaux sont identiques entre elles et ce sont leurs largeurs qui sont différentes entre elles, tout en étant constantes tout le long de chaque canal.

Pour diminuer le nombre des lumières 8 et éventuellement gagner de la place, on peut mettre en commun l'une au moins de ces lumières, telle que celle désignée par la référence O sur la figure 3, pour au moins deux canaux et donc raccorder ceux-ci entre eux (en un point P, figure 3) à une certaine distance de la lumière considérée, ce qui forme un tronçon de canal (OP) commun à ces canaux.

Sur les dessins, on voit encore :
- que, d'une façon connue en soi, les deux chambres A et B formées entre l'armature 2 et le corps en élastomère 3 -qui enrobe l'armature 1- sont respectivement du type d'une chambre de compensation, délimitée en partie par un soufflet très déformable 3₁ et d'une chambre de travail, délimitée en partie par une paroi 3₂ propre à transférer des charges entre les deux armatures 1 et 2 selon la direction X et travaillant élastiquement à la compression et à la flexion,
- et que le corps 3 est adhéré sur deux anneaux rigides 13, 14 interposés axialement et jointivement entre les extrémités axiales du fourreau 7 et des bords 2₁ rabattus vers l'intérieur de l'armature tubulaire externe 2.

En suite de quoi et quel que soit le mode de réalisation adopté, on obtient finalement un dispositif antivibratoire hydraulique dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes definies par la revendication 1, notamment:
- celles où le dispositif antivibratoire hydraulique serait du type à débattements axiaux et non diamétraux, les deux armatures rigides étant alors un plot et un anneau d'axe X réunis entre eux par une paroi élastique tronconique d'axe X, l'anneau portant un soufflet étanche déformable et une cloison intermédiaire qui divise en les deux chambres A et B ci-dessus l'intérieur du boîtier composé par les armatures, la paroi et le soufflet, et le passage étranglé réunissant comme auparavant les deux chambres A et B,
- celles où le nombre des tronçons composant le passage étranglé serait supérieur à trois, les ouvertures des différents tronçons autres que le premier étant encore réglables successivement et à l'aide de cames rotatives solidaires d'un même arbre de façon telle que, pour l'une des positions angulaires extrêmes de cet arbre, la totalité de ces autres tronçons soient fermés et qu'au contraire pour l'autre position angulaire extrême dudit arbre, la totalité desdits autres tronçons soient ouverts.

## Revendications

1. Dispositif antivibratoire hydraulique destiné à être interposé entre deux éléments rigides, comportant deux armatures rigides (1,2) solidarisables respectivement avec les deux éléments ridiges à réunir, un corps en élastomère (3) travaillant selon une direction X, corps reliant entre elles les deux armatures et formant au moins en partie avec celles-ci deux chambres étanches (A,B) alignées selon la direction X, un passage étranglé faisant communiquer les deux chambres entre elles, et une masse de liquide remplissant les deux chambres et le passage étranglé, ledit passage étranglé étant décomposé en au moins trois tronçons (4,5,6) montés en parallèle entre les deux chambres, la section d'ouverture de l'un de ces tronçons dit premier tronçon (4) étant invariable et celles des deux autres tronçons, dits respectivement second tronçon (5) et troisième tronçon (6), étant réglables et asservies aux fréquences des oscillations à amortir, les dimensions des trois tronçons étant choisies de façon celle que le dispositif assure un amortissement optimum sur une relativement haute fréquence F₂ pour les ouvertures maximum des second et troisième tronçons, caractérisé en ce que les dimensions des trois tronçons sont choisies de façon telle que le dispositif assure un amortissement optimum sur une relativement basse fréquence F₁ pour les fermetures maximum des second et troisième tronçons, et sur une fréquence F₃ située dans l'intervalle séparant les fréquences F₁ et F₂ pour l'ouverture maximum du troisième tronçon et la fermeture maximum du second tronçon, en ce que les réglages des sections d'ouverture des second et troisième tronçons (5,6) sont assurés à l'aide de cames rotatives (9,10) solidaires d'un même arbre (11), en ce que les positions angulaires de cet arbre sont asservies aux fréquences des oscillations à amortir, et en ce que ledit arbre peut être disposé sélectivement dans une première position angulaire où les cames obturent totalement les second et troisième tronçons, dans une deuxième position angulaire où les cames obturent totalement le second tronçon et dégagent totalement le troisième tronçon et dans une troisième position angulaire où les cames dégagent totalement les second et troisième tronçons.

2. Dispositif antivibratoire hydraulique selon la revendication 1, caractérisé en ce que les profils des cames (9,10) sont dessinés de façon telle que, à partir d'une position angulaire pour laquelle elles obturent totalement les second (5) et troisième (6) tronçons, la rotation de l'arbre (11) dont elles sont solidaires ait pour effet, successivement, de dégager progressivement le troisième tronçon jusqu'à son ouverture maximum, puis le second tronçon jusqu'à son ouverture maximum.

3. Dispositif antivibratoire hydraulique selon l'une quelconque des revendications 1 et 2, caractérisé en ce que les fréquences F₁ et F₂ sont respectivement de l'ordre de 5 Hz et de l'ordre de 30 à 40 Hz.

4. Dispositif antivibratoire hydraulique selon l'une quelconque des précédentes revendications, caractérisé en ce qu'au moins deux des trois tronçons (4,6) ont une portion en commun débouchant dans l'une des chambres (A) par un même orifice (8).

5. Dispositif antivibratoire hydraulique selon l'une quelconque des précédentes revendications, caractérisé en ce que le nombre des tronçons composant le passage étranglé est supérieur à trois, les ouvertures des différents tronçons autres que le premier étant encore réglables successivement et à l'aide de cames rotatives solidaires d'un même arbre.

## Claims

1. Hydraulic antivibratory device for insertion between two rigid elements, comprising two rigid frames (1, 2) able to be secured respectively to the two rigid elements to be joined together, an elastomer body (3) working along a direction X, said body joining the two frames together and forming at least partially therewith two sealed chambers (A,B) aligned in the direction X, a restricted passage causing the two chambers to communicate with each other, and a liquid mass filling the two chambers and the restricted passage, said restricted passage being formed of at least three portions (4, 5, 6) mounted in parallel between the two chambers, the flow section of one of these portions, said first portion (4) being invariable and that of the two other portions, said respectively second portion (5) and third portion (6), being adjustable and dependent on the frequencies of the oscillations to be damped, the dimensions of the three portions being determined so that the device provides optimum damping at a relatively high frequency F₂ for the maximum openings of the second and third portions, characterized in that the dimensions of the three portions are determined so that the device provides optimum damping at a relatively low frequency F₁ for the maximum closures of the second and third portions and at a frequency F₃ situated in the range separating the frequencies F₁ and F₂ for maximum opening of the third portion and maximum closure of the second portion, in that the adjustment of the flow sections of the second and third portions (5, 6) is provided by rotary cams (9, 10) fast with the same shaft (11), in that the angular positions of this shaft are made dependent on the frequencies of the oscillations to be damped, and in that said shaft can be selectively placed in a first angular position for which the cams completely close the second and third portions, in a second angular position for which the cams completely close the second portion and totally open the third portion and in a third angular position for which the cams completely open the second and third portions.

2. Hydraulic antivibratory device according to claim 1, characterized in that the profiles of the cams (9, 10) are designed so that, from an angular position in which they completely close the second (5) and third (6) portions, the rotation of the shaft (11) with which they are fast results, successively, in progressively freeing the third portion as far as maximum opening thereof, then the second portion as far as maximum opening thereof.

3. Hydraulic antivibratory device according to any one of the claims 1 and 2, characterized in that the frequencies F₁ and F₂ are respectively of about 5 Hz and about 30 to 40 Hz.

4. Hydraulic antivibratory device according to any one of the preceding claims, characterized in that two (4, 6) at least of the three portions have a common part opening into one of the chambers (A) through the same orifice (8).

5. Hydraulic antivibratory device according to any one of the preceding claims, characterized in that the number of portions forming the restricted passage is greater than three , the openings of the different portions other than the first one being further adjustable successively by means of rotary cams fast with the same shaft.

## Patentansprüche

1. Hydraulische Antischwingungsvorrichtung zum Einbau zwischen zwei starren Elementen, die aus folgenden Teilen besteht: zwei starren Armaturen (1, 2) die jeweils an einem der beiden starren, zu verbindenden Elemente anbringbar sind, einem Körper (3) aus in einer Richtung X arbeitendem elastomerem Material, der die beiden Armaturen miteinander verbindet und wenigstens teilweise mit diesen zwei dichte Kammern (A, B,) bildet, die in der Richtung X ausgerichtet sind, einem verengten Durchgang, der die beiden Kammern untereinander verbindet und einer flüssigen Masse, die die beiden Kammern und den verengten Durchgang ausfüllt, wobei der verengte Durchgang in wenigstens drei Abschnitte (4, 5, 6) aufgeteilt ist, die parallel zwischen den beiden Kammern angeordnet sind, der Öffnungsquerschnitt einer dieser Abschnitte, erster Abschnitt (4) genannt, unveränderbar ist und die Querschnitte der beiden anderen Abschnitte, zweiter Abschnitt (5) bzw. dritter Abschnitt (6) genannt, regulierbar und auf Frequenzen der zu dämpfenden Schwingungen abgestimmt sind, wobei ferner die Abmessungen der drei Abschnitte so gewählt sind, daß die Vorrichtung eine optimale Dämpfung für eine relativ hohe Frequenz F₂ bei maximaler Öffnung des zweiten und dritten Abschnittes sicherstellt, dadurch gekennzeichnet, daß die Abmessungen der drei Abschnitte so gewählt sind, daß die Vorrichtung eine optimale Dämpfung für eine relativ niedrige Frequenz F₁ bei maximalem Verschluß des zweiten und dritten Abschnittes und für eine Frequenz F₃, die in dem Intervall liegt, das die Frequenzen F₁ und F₂ trennt, bei maximaler Öffnung des dritten Abschnittes und maximalem Verschluß des zweiten Abschnittes sicherstellt, daß die Regulierung der Öffnungsquerschnitte des zweiten und dritten Abschnittes (5, 6) mittels drehbarer Nocken (9, 10) erfolgt, die an derselben Welle (11) befestigt sind, daß die Winkelstellungen dieser Welle an Frequenzen der zu dämpfenden Schwingungen angepaßt sind und daß die Welle selektiv in eine erste Winkelstellung, bei der die Nocken den zweiten und den dritten Abschnitt vollkommen absperren, in eine zweite Winkelstellung, bei der die Nocken den zweiten Abschnitt vollständig verschließen und den dritten Abschnitt vollständig freigeben und in eine dritte Winkelstellung gebracht werden kann, bei der die Nocken den zweiten und den dritten Abschnitt vollständig freigeben.

2. Hydraulische Antischwingungsvorrichtung nach Anspruch 1, dadurch gekennzeichnet, daß die Profile der Nocken (9, 10) so ausgebildet sind, daß, ausgehend von einer Winkelstellung, bei der sie den zweiten Abschnitt (5) und den dritten Abschnitt (6) vollständig absperren, die Drehung der Welle (11), an der sie befestigt sind, bewirkt, daß nacheinander fortschreitend der dritte Abschnitt bis zu seiner maximalen Öffnung und dann der zweite Abschnitt bis zu seiner vollständigen Öffnung freigegeben wird.

3. Hydraulische Antischwingungsvorrichtung nach einem der Ansprüche 1 und 2, dadurch gekennzeichnet, daß die Frequenzen F₁ und F₂ in der Größenordnung von 5 Hz bzw. in der Größenordnung von 30 bis 40 Hz liegen.

4. Hydraulische Antischwingungsvorrichtung nach einem der vorhergehenden Ansprüche, dadurch gekennzeichnet, daß wenigstens zwei der drei Abschnitte (4, 6) einen gemeinsamen Abschnitt haben, der in eine der Kammern (A) durch dieselbe Öffnung (8) mündet.

5. Hydraulische Antischwingungsvorrichtung nach einem der vorhergehenden Ansprüche, dadurch gekennzeichnet, daß die Anzahl der Abschnitte, die den verengten Durchgang bilden, größer als drei ist, wobei die Öffnungen der verschiedenen Abschnitte mit Ausnahme des ersten Abschnittes überdies nacheinander und mittels drehbarer Nocken, die an derselben Welle befestigt sind, einstellbar sind.
